(19) Europäisches Patentamt
European Patent Office
Office européen des brevets

(11) **EP 2 111 685 B1**

(12) **EUROPÄISCHE PATENTSCHRIFT**

(45) Veröffentlichungstag und Bekanntmachung des Hinweises auf die Patenterteilung:
**22.04.2020  Patentblatt 2020/17**

(21) Anmeldenummer: **07856815.1**

(22) Anmeldetag: **18.12.2007**

(51) Int Cl.:
*H02M 3/158* (2006.01)    *H01M 10/48* (2006.01)

(86) Internationale Anmeldenummer:
**PCT/EP2007/011083**

(87) Internationale Veröffentlichungsnummer:
**WO 2008/089828 (31.07.2008 Gazette 2008/31)**

(54) **SCHALTUNGSANORDNUNG ZUR VERSORGUNG EINER LAST AUS EINER SPANNUNGSQUELLE SOWIE ENERGIESPEICHER MIT EINER DERARTIGEN SCHALTUNGSANORDNUNG**

CIRCUIT ARRANGEMENT FOR SUPPLYING A LOAD FROM A VOLTAGE SOURCE AND ENERGY ACCUMULATOR HAVING SUCH A CIRCUIT ARRANGEMENT

CIRCUITERIE POUR L'ALIMENTATION D'UNE CHARGE À PARTIR D'UNE SOURCE DE TENSION, ET ACCUMULATEUR D'ÉNERGIE DOTÉ D'UN TEL MONTAGE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **22.01.2007   DE 102007004151**

(43) Veröffentlichungstag der Anmeldung:
**28.10.2009   Patentblatt 2009/44**

(73) Patentinhaber: **Braun GmbH
61476 Kronberg/Taunus (DE)**

(72) Erfinder:
• **KLEMM, Torsten
65812 Bad Soden (DE)**
• **RIEMER, Jörn
61381 Friedrichsdorf (DE)**

(74) Vertreter: **P&G Patent Germany
Procter & Gamble Service GmbH
Sulzbacher Straße 40
65824 Schwalbach am Taunus (DE)**

(56) Entgegenhaltungen:
WO-A-2005/060067    WO-A-2006/081613
US-A- 5 373 195    US-A1- 2001 033 156
US-B1- 6 198 250

**Beschreibung**

Die Erfindung betrifft ein Elektrokleingerät, eine elektrische Zahnbürste sowie ein Haarentfernungsgerät mit einer Schaltungsanordnung zur Versorgung einer Last aus einer Spannungsquelle.

Es sind Drossel-Aufwärtswandler (Boost-Converter) zur Versorgung einer Last aus einer Batterie bekannt. Ein derartiger Drosselwandler enthält eine Induktivität in Form einer Spule und einen steuerbaren Schalter, die mit der Batterie in Reihe geschaltet sind. Parallel zum steuerbaren Schalter befindet sich eine Reihenschaltung aus einer Diode und einem Kondensator. Die zu versorgende Last wird parallel zum Kondensator angeschlossen.

Aus der WO 02/15374 A1 ist eine Schaltungsanordnung und ein batteriebetriebenes Elektrogerät mit einem Elektromotor und einem Drosselwandler bekannt, dessen Drossel durch den Elektromotor gebildet ist, d.h. der Elektromotor des Elektrogeräts hat auch die Funktion der für einen Drosselwandler unentbehrlichen Drossel. Somit weist diese Schaltungsanordnung weniger Bauelemente als üblich auf.

WO 2006/081613 A1 offenbart eine Spannungsversorgungseinrichtung für eine Last.

Es ist Aufgabe der vorliegenden Erfindung ein Elektrokleingerät mit einer Schaltungsanordnung zur Versorgung einer Last aus einer Spannungsquelle anzugeben, die mit besonders wenigen Bauelementen auskommt, und verbesserte Energiespeicher anzugeben.

Gemäß einem ersten Aspekt der Erfindung wird ein Elektrokleingerät gemäß Anspruch 1 bereitgestellt.

Gemäß einem zweiten Aspekt der Erfindung werden eine elektrische Zahnbürste und ein Haarentfernungsgerät gemäß Anspruch 5 bereitgestellt.

Das Elektrokleingerät, die elektrische Zahnbürste und das Haarentfernungsgerät weisen eine Schaltungsanordnung auf, bei der einem steuerbaren Schalter eine Reihenschaltung aus einem Gleichrichterelement und einem Ladungsspeicherelement parallel geschaltet ist, wobei die Spannungsquelle parallel zum steuerbaren Schalter und die Last parallel zum Ladungsspeicherelement anzuschließen ist. Die Schaltungsanordnung enthält ferner eine an sich bekannte Steuerschaltung, die den steuerbaren Schalter in an sich gleicher Weise wie bei bekannten Drosselwandlern ansteuert, und funktioniert auch wie die bekannten Drosselwandler, sofern die Spannungsquelle eine genügend große Induktivität aufweist. Das Gleichrichterelement kann beispielsweise durch eine Diode oder durch einen zweiten steuerbaren Schalter realisiert sein, der von der Steuerschaltung immer dann geschlossen wird, wenn ein Strom von der Spannungsquelle in das Ladungsspeicherelement und die Last fließen soll, und immer dann geöffnet wird, wenn ein Stromfluss in umgekehrter Richtung verhindert werden soll.

Die Schaltungsanordnung hat jedoch gegenüber der aus der WO 02/15374 A1 bekannten Schaltungsanordnung und anderen bekannten Drosselwandlern den Vorteil, dass sie keine Drosselspule enthält, und daher besonders preisgünstig und Platz sparend realisiert werden kann.

Die Schaltungsanordnung ist für den Betrieb an einer Spannungsquelle mit großer parasitärer Induktivität ausgelegt. Geeignete Spannungsquellen sind beispielsweise Lithium-Ionen-Akkumulatoren. So haben Messungen gezeigt, dass Lithium-Ionen-Akkumulatoren etwa eine parasitäre Induktivität von 300 nH (nano-Henry) haben können. Nickel-Cadmium-Batterien (oder auch Nickel-Metallhydrid-Batterien) können im Vergleich dazu parasitäre Induktivitäten von etwa 30-50 nH haben und Elektrolytkondensatoren eine parasitäre Induktivität von 10 nH oder auch weniger.

Die erfindungsgemäße Schaltungsanordnung ist für Elektrokleingeräte vorgesehen, beispielsweise elektrische Zahnbürsten oder elektrische Rasierapparate, die einen Akkumulator oder Doppelschichtkondensator zur Spannungsversorgung enthalten.

Die Erfindung betrifft ein Elektrokleingerät, etwa eine elektrische Zahnbürste, ein Haarentfernungsgerät wie einen Rasierer oder einen Epilierer, ein Haushaltsgerät wie einen Stabmixer oder einen Akkuschrauber oder -bohrer, dass eine Schaltungsanordnung, eine Spannungsquelle und eine Last aufweist.

Die Erfindung wird nachstehend anhand zweier Ausführungsbeispiele für erfindungsgemäße Schaltungsanordnungen und Energiespeicher erläutert, die in den Zeichnungen dargestellt sind. Weitere Ausführungen sind in der Beschreibung beschrieben. Es zeigen

Fig. 1    eine erste Schaltungsanordnung und einen ersten Energiespeicher mit einer Diode als Gleichrichterelement, und

Fig. 2    eine zweite Schaltungsanordnung und einen zweiten Energiespeicher mit einem steuerbaren Schalter als Gleichrichterelement.

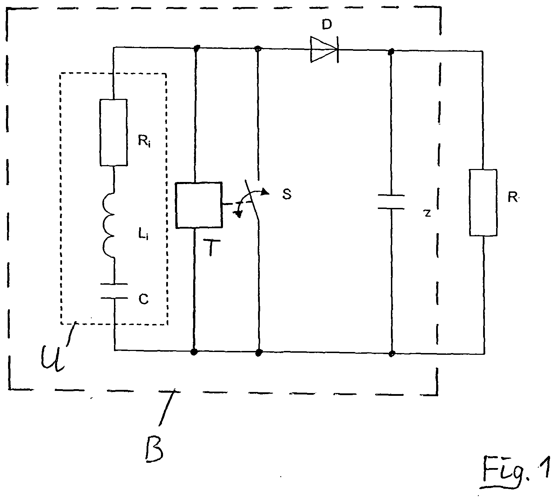

Die in Figur 1 dargestellte erste Schaltungsanordnung enthält einen steuerbaren Schalter S, dem eine Reihenschaltung aus einem Gleichrichterelement D und einem Ladungsspeicherelement Z parallel geschaltet ist. Der steuerbare Schalter S enthält vorzugsweise ein elektronisches Bauelement, beispielsweise einen Transistor. Das Gleichrichterelement D ist durch eine Diode und das Ladungsspeicherelement Z durch einen Kondensator realisiert. Die Schaltungsanordnung enthält ferner eine an sich bekannte Steuerschaltung T, die den steuerbaren Schalter S in an sich gleicher Weise wie bei bekannten Drosselwandlern ansteuert. Die Schaltungsanordnung ist mit einer Spannungsquelle U verbunden, die parallel zum steuerbaren Schalter S angeschlossen ist. Mit dieser Schaltungsanordnung kann aus der Spannungsquelle U eine Last R versorgt werden, die parallel zum Ladungsspeicherelement Z anzuschließen ist. Hervorzuheben ist, dass die Schaltungsanordnung in der Verbindung von Spannungsquelle U und Last R keine Spule aufweist.

Die Funktionsweise der Schaltungsanordnung ist dieselbe wie die eines bekannten Drosselwandlers, sofern die Spannungsquelle U eine genügend große parasitäre Induktivität Li aufweist. Ist der steuerbare Schalter S geschlossen, fließt ein Strom durch die parasitäre Induktivität Li der Spannungsquelle U und den steuerbaren Schalter S. Die parasitäre Induktivität Li der Spannungsquelle U wandelt während dieser Zeit elektrische Energie in magnetische Energie um und speichert sie. Wird jetzt der steuerbare Schalter S geöffnet, wird die gespeicherte magnetische Energie in eine elektrische Spannung und einen elektrischen Strom zurückverwandelt, der durch die Diode in den Kondensator und die Last R fließt. Dabei wirkt die parasitäre Induktivität Li der Spannungsquelle U wie eine zusätzliche Spannungsquelle, deren Spannung mit der Spannung der Spannungsquelle U in Reihe geschaltet ist, sodass die Ausgangsspannung der Schaltungsanordnung gegenüber der Spannung der Spannungsquelle U um die Spannung an der parasitären Induktivität Li erhöht und um den Spannungsabfall an der Diode vermindert ist. Das abwechselnde Schließen und Öffnen des steuerbaren Schalters S wird von der Steuerschaltung T beispielsweise so gesteuert, dass die Ausgangsspannung der Schaltungsanordnung einen gewünschten Wert annimmt, der vom Verhältnis der Stromflusszeit und der Sperrzeit des steuerbaren Schalters S abhängt. In dem beschriebenen Betriebszustand der Schaltungsanordnung wirkt also die Induktivität Li der Spannungsquelle U wie eine zusätzliche Spannungsquelle.

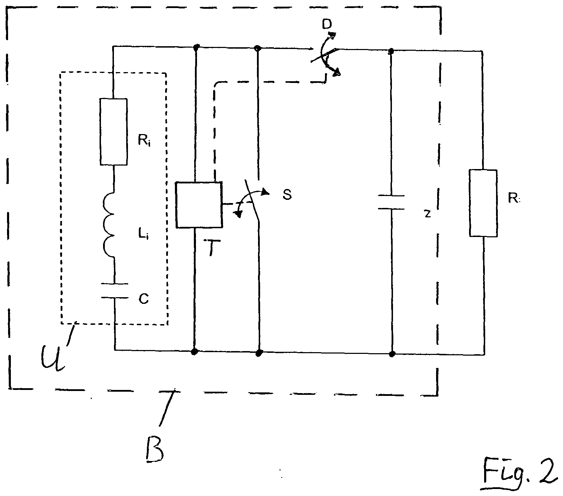

Die in Figur 2 dargestellte zweite Schaltungsanordnung unterscheidet sich von der oben beschriebenen Ausführung dadurch, dass als Gleichrichterelement D statt einer Diode ein zweiter steuerbarer Schalter vorgesehen ist, der von der Steuerschaltung T ansteuerbar ist. Der zweite steuerbare Schalter wird von der Steuerschaltung T immer dann geschlossen, wenn ein Strom von der Spannungsquelle U in das Ladungsspeicherelement Z und die Last R fließen soll, und immer dann geöffnet, wenn ein Stromfluss in umgekehrter Richtung verhindert werden soll. Im einfachsten Fall ist der zweite steuerbare Schalter immer dann geöffnet, wenn der steuerbare Schalter S geschlossen ist und umgekehrt. Vorzugsweise ist der zweite steuerbare Schalter auch während der Schaltvorgänge des steuerbaren Schalters S geöffnet. Wenn die Schaltungsanordnung jedoch nicht in Betrieb ist, sollten beide steuerbare Schalter geöffnet sein.

Bei Varianten der oben beschriebenen Schaltungsanordnungen weist die Steuerschaltung T zusätzlich eine Einrichtung zum Messen des von der Spannungsquelle U gelieferten Stroms auf, und steuert das abwechselnde Öffnen und Schließen des steuerbaren Schalters S in einem vom gemessenen Strom beeinflussbaren Takt, sodass die Schaltungsanordnung mit einem besonders hohen Wirkungsgrad arbeitet.

Bei allen oben beschriebenen Varianten und Ausführungen der Schaltungsanordnung kann die Steuerschaltung T vorzugsweise einen weiteren Energiespeicher aufweisen, beispielsweise einen Stützkondensator, der die Steuerschaltung T während der Zeit mit elektrischer Energie versorgt, während der der steuerbare Schalter S geschlossen und daher die Spannungsquelle U kurzgeschlossen ist.

Ein erfindungsgemäßes Elektrokleingerät mit einem Energiespeicher B enthält mindestens eine an sich bekannte Zelle als Spannungsquelle U die in an sich bekannter Weise einen Innenwiderstand Ri, eine parasitäre Induktivität Li und einen Ladungsspeicher C aufweist. Der Energiespeicher B ist ferner mit einer der oben beschriebenen Schaltungsanordnungen versehen. Vorzugsweise befindet sich die Schaltungsanordnung innerhalb des Gehäuses des Energiespeichers. Bei entsprechender Auslegung der Steuerschaltung T liefert dieser Energiespeicher B (sofern er nicht leer ist) eine praktisch konstante Ausgangsspannung, die auch größer sein kann (beispielsweise 5 V) als die Nennspannung der in ihm vorhandenen Zelle (beispielsweise 3,6 V).

Die übertragbare Leistung P aus einem solchen Energiespeicher ist

$$P \le E \cdot f = \frac{1}{2} LI^2 \cdot f \,,$$

sodass bei exemplarischen Werten der parasitären Induktivität von L = 300 nH, des Stromes von I = 4 A und der Schaltfrequenz von f = 200 Hz, welche etwa bei einem elektrischen Trockenrasierer auftreten können, eine übertragbare Leistung von maximal etwa 1 mW erreichbar ist, die zur Versorgung von kleinen Schaltungsteilen ausreicht.

**Patentansprüche**

1. Elektrokleingerät mit einer Spannungsquelle (U) und einer Schaltungsanordnung zur Versorgung einer Last (R) aus der Spannungsquelle (U), wobei die Last einen Motor oder einen Mikrocontroller aufweist, mit einem steuerbaren Schalter (S), dem eine Reihenschaltung aus einem Gleichrichterelement (D) und einem Ladungsspeicherelement (Z) parallel geschaltet ist, wobei die Spannungsquelle (U) parallel zum steuerbaren Schalter (S) angeschlossen ist und die Last (R) parallel zum Ladungsspeicherelement (Z) anzuschließen ist, wobei die Spannungsquelle (U) ein Lithium-Ionen-Akkumulator ist und die parasitäre Induktivität (Li) der Spannungsquelle (U) in einem Betriebszustand der Schaltungsanordnung als zusätzliche Spannungsquelle wirkt.

2. Elektrokleingerät nach Anspruch 1, wobei die parasitäre Induktivität (Li) der Spannungsquelle (U) einen Wert von etwa 300 nH oder höher hat.

3. Elektrokleingerät nach einem der Ansprüche 1 bis 2, **dadurch gekennzeichnet, dass** die Verbindung von Spannungsquelle (U) und Last (R) frei von einem elektrischen Bauteil ist, dessen wesentliche elektrische Eigenschaft eine Induktivität ist.

4. Elektrokleingerät nach einem der Ansprüche 1 bis 3, bei dem die Schaltungsanordnung so ausgelegt ist, dass die Ausgangsspannung des Energiespeichers praktisch konstant ist.

5. Elektrische Zahnbürste oder Haarentfernungsgerät mit einer Spannungsquelle (U) und einer Schaltungsanordnung zur Versorgung einer Last (R) aus der Spannungsquelle (U), mit einem steuerbaren Schalter (S), dem eine Reihenschaltung aus einem Gleichrichterelement (D) und einem Ladungsspeicherelement (Z) parallel geschaltet ist, wobei die Spannungsquelle (U) parallel zum steuerbaren Schalter (S) angeschlossen ist und die Last (R) parallel zum Ladungsspeicherelement (Z) anzuschließen ist, wobei die parasitäre Induktivität (Li) der Spannungsquelle (U) in einem Betriebszustand der Schaltungsanordnung als zusätzliche Spannungsquelle wirkt.

**Claims**

1. Small electrical appliance with a voltage source (U) and a circuit arrangement for supplying a load (R) from the voltage source (U), wherein the load has a motor or a microcontroller with a controllable switch (S) to which a series circuit comprising a rectifier element (D) and a charge storage element (Z) is connected in parallel, wherein the voltage source (U) is connected in parallel to the controllable switches (S) and the load (R) is to be connected in parallel to the charge storage element (Z), wherein the voltage source (U) is a lithium-ion battery and the parasitic inductor (Li) of the voltage source (U) in an operating state of the circuit arrangement acts as an additional voltage source.

2. Small electrical appliance according to Claim 1, wherein the parasitic inductance (Li) of the voltage source (U) has a value of about 300 nH or higher.

3. Small electrical appliance according to one of Claims 1 to 2, **characterized in that** the connection between the voltage source (U) and the load (R) is free of an electrical component whose essential electrical property is an inductance.

4. Small electrical appliance according to one of Claims 1 to 3, wherein the circuit arrangement is designed such that the output voltage of the energy storage device is practically constant.

5. An electric toothbrush or a depilation appliance with a voltage source (U) and a circuit arrangement for supplying a load (R) from the voltage source (U), comprising a controllable switch (S) to which a series circuit consisting of a rectifier element (D) and a charge storage element (S) is connected in parallel, wherein the voltage source (U) is connected in parallel to the controllable switch (S) and the load (R) is to be connected in parallel to the charge storage element (Z), wherein the parasitic inductor (Li) of the voltage source (U) in an operating state of the circuit arrangement acts as an additional voltage source.

**Revendications**

1. Petit appareil électrique pourvu d'une source de tension (U) et d'un agencement de circuit pour alimenter une charge (R) à partir de la source de tension (U), la charge présentant un moteur ou un microcontrôleur, présentant un interrupteur pouvant être commandé (S), auquel un circuit série d'un élément redresseur (D) et d'un élément d'accumulation de charges (Z) est commuté en parallèle, la source de tension (U) étant connectée en parallèle avec l'interrupteur pouvant être commandé (S) et la charge (R) étant à connecter en parallèle avec l'élément d'accumulation de charges (Z), la source de tension (U) étant un accumulateur lithium-ion et l'inductance parasitaire (Li) de la source de tension (U) ayant l'effet d'une source de tension supplémentaire dans un état de fonctionnement de l'agencement de circuit.

2. Petit appareil électrique selon la revendication 1, l'inductance parasitaire (Li) de la source de tension (U) ayant une valeur d'environ 300 nH ou plus.

3. Petit appareil électrique selon l'une quelconque des revendications de 1 à 2, **caractérisé en ce que** la connexion de la source de tension (U) et de la charge (R) est exempte d'un composant électrique dont la caractéristique électrique essentielle est une inductance.

4. Petit appareil électrique selon l'une quelconque des revendications de 1 à 3, dans lequel l'agencement de circuit est configuré de telle sorte que la tension de sortie de l'accumulateur d'énergie est pratiquement constante.

5. Brosse à dents électrique ou appareil à épiler pourvu d'une source de tension (U) et d'un agencement de circuit pour alimenter une charge (R) à partir de la source de tension (U), présentant un interrupteur pouvant être commandé (S), auquel un circuit série d'un élément redresseur (D) et d'un élément d'accumulation de charges (Z) est commuté en parallèle, la source de tension (U) étant connectée en parallèle avec l'interrupteur pouvant être commandé (S) et la charge (R) étant à connecter en parallèle avec l'élément d'accumulation de charges (Z), l'inductance parasitaire (Li) de la source de tension (U) ayant l'effet d'une source de tension supplémentaire dans un état de fonctionnement de l'agencement de circuit.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0215374 A1

- WO 2006081613 A1